# FASCICULE DE BREVET EUROPEEN

(11) **EP 2 501 642 B1**
(45) Date de publication et mention de la délivrance du brevet: **16.10.2013**
(21) Numéro de dépôt: 10778670.9
(22) Date de dépôt: 19.11.2010
(51) Int. Cl.: B64F 5/00, B66F 9/06, B66F 7/06, B25H 1/00, B66C 23/48

(54) **ENSEMBLE DE MANUTENTION D'UN MODULE DE MOTEUR D'AERONEF**
HANDHABUNGSEINRICHTUNG FÜR EINE FLUGZEUGTRIEBWERKEINHEIT
HANDLING SYSTEM FOR AN AIRCRAFT ENGINE MODULE

(30) Priorité: 20.11.2009 FR 0958240
(43) Date de publication de la demande: 26.09.2012
(73) Titulaire: Snecma, 75015 Paris (FR)
(72) Inventeur: BOULANGER, Pascal, F-95830 Cormeilles En Vexin (FR); DAVID, Daniel, F-77830 Valence En Brie (FR); EARITH, Thomas, Julien, Roland, F-77250 Veneux Les Sablons (FR); MARCHAND, Jacques, F-77133 Machault (FR)
(74) Mandataire: Ilgart, Jean-Christophe
(86) Numéro de dépôt international: PCT/EP2010/067858
(87) Numéro de publication internationale: WO 2011/061307

(56) Documents cités:
- DE-A1- 3 427 042
- US-A- 1 481 503
- US-A- 1 600 835
- US-A- 5 863 034
- US-A1- 2009 020 934

## Description

L'invention présente a trait à un ensemble de manutention d'un moteur d'aéronef.

Les moteurs d'aéronefs sont fabriqués d'abord en modules séparés, qui sont ensuite assemblés entre eux. Les modules fabriqués sont transportés au lieu de l'assemblage, puis sortis de leurs emballages et déplacés avec précision jusqu'à leur position d'accostage au module voisin. Les déplacements sont assurés essentiellement par manutention, même si on dispose d'engins tels que les palans pour soulever les modules et de chariots pour les déplacer.

Cette manutention est longue et difficile puisque les modules de moteurs d'aéronefs sont des pièces volumineuses et lourdes tout en étant fragiles. Une difficulté particulière provient de ce qu'ils sont en général assemblés avec leur axe de rotation horizontal alors qu'ils sont souvent placés avec l'axe de rotation vertical pendant le transport en caisse, afin qu'ils reposent sur une surface d'extrémité plane et que la stabilité au transport soit améliorée: ils doivent donc être renversés quand ils ont été sortis de la caisse, normalement avant d'être placés sur le chariot, mais cette opération est délicate et demande donc beaucoup de précautions. La dépose du module sur un chariot est elle aussi délicate, et il faut ajouter au module des supports spéciaux, appelés «oreilles», pour lui permettre d'y reposer de façon stable et avec une superficie suffisante, ce qui serait impossible autrement à cause de sa forme de révolution en général conique et irrégulière. On doit ajouter qu'il est encore nécessaire d'employer des outillages appelés « strongback », qu'on assemble aux extrémités du module, afin de le renforcer tout en arrêtant les mouvements entre le rotor et le stator avant qu'il ne soit monté aux autres modules.

L'invention est relative à un ensemble de manutention d'un module de moteur d'aéronef qui évite les inconvénients mentionnés et permet de préparer le montage du module à un module voisin dans de meilleures conditions de travail, plus rapidement et avec des interventions manuelles beaucoup réduites et nécessitant moins de précaution.

DE-A-34 27 042 décrit un ensemble de manutention de moteur d'aéronef où un chariot mobile est pourvu de moyens de fixation du module et de moyens d'ajustement de position du module, sans reproduire d'autres caractéristiques de l'invention et notamment sans réaliser de fixation par l'intermédiaire d'un outillage fixé à une extrémité du module et offrant la possibilité de basculer complètement le module. D'autres chariots ou dispositifs de support sont les sujets de US-A-1481 503, US-A-1 600 835, US-A-2009/020 934 et US-A-5 863 034.

Sous une forme générale, l'invention concerne un ensemble de manutention d'un module de moteur d'aéronef, comprenant un chariot mobile et un outillage placé à une extrémité du module, l'outillage comprenant une monture et des dispositifs de fixation au module, et caractérisé en ce que le chariot comprend une armature supérieure établie sur un châssis de support du module et pivotant autour d'un axe horizontal, l'armature supérieure et l'outillage comprenant des dispositifs complémentaires de fixation du module au chariot dans une position où un axe du module croise l'axe horizontal.

Le module de moteur est ainsi fixé au chariot par l'intermédiaire de l'outillage, qui est avantageusement un « strongback » adapté pour l'invention : on évite ainsi de déposer le module sur le chariot de façon directe ou par l'intermédiaire d'une «oreille», ce qui réduit les risques d'endommagement par choc ou par pression de contact excessive. Et le basculement du module, nécessaire pour passer de la configuration de transport à axe de rotation vertical à la configuration de montage à axe de rotation horizontal, est accompli de façon simple par le chariot, sans effort ni précaution particulière pour éviter des collisions ou ajuster l'orientation atteinte par le module.

Un élément important de l'ensemble est relatif à l'élévation du châssis, afin d'ajuster la hauteur du module au moment de l'assemblage. On y parvient au moyen d'un dispositif qui peut être indépendant du chariot et qui comprend alors une table fixe au lieu où l'assemblage pourrait s'effectuer. Le chariot est apporté au-dessus de la table, qui le soulève à la hauteur voulue, le module restant solidement fixé au chariot.

L'assemblage peut être accompli en libérant le module du chariot et en le soulevant par un palan. L'ensemble de manutention peut alors être complété par un bras de levage s'étendant d'une extrémité à l'autre du module, en étant par exemple fixé au module par une extrémité et à l'outillage par l'autre extrémité, et muni de moyens d'accrochage qui permettent de le soulever au centre de gravité du module, qui ne risque plus donc de basculer.

L'invention sera maintenant décrite plus en détail au moyen des figures, parmi lesquelles :
- la figure 1 représente le module monté sur le chariot,
- les figures 2 et 3 représentent le module monté sur le chariot après le basculement,
- la figure 4 illustre le module à son arrivée au lieu de l'assemblage, avant d'employer le chariot,
- et la figure 5 illustre le module juste avant d'être installé sur le chariot.

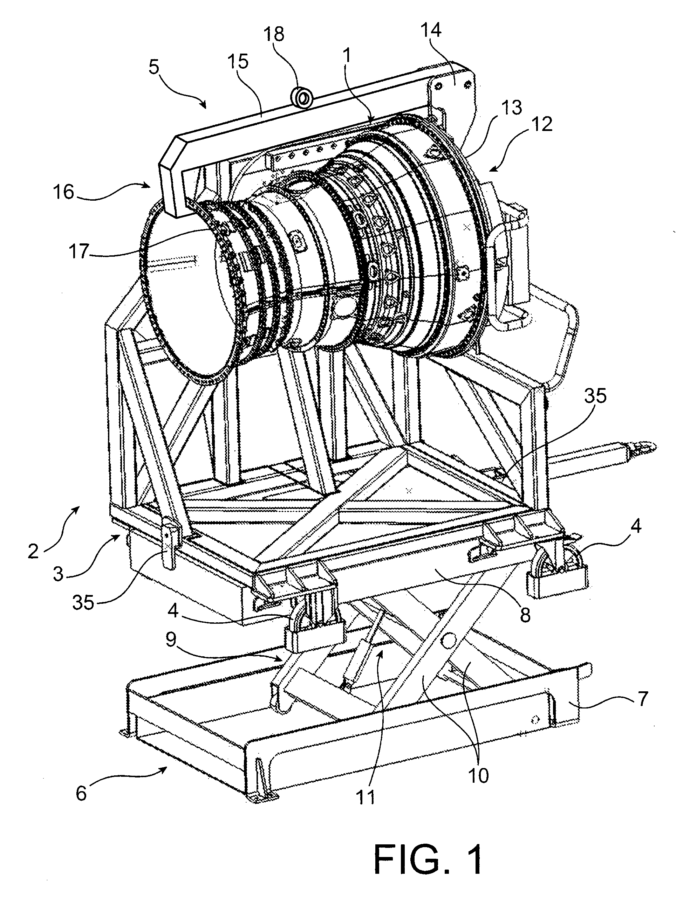

Le module 1 de moteur d'aéronef qui apparaît dans ce mode de réalisation de l'invention est appelé « core », ou corps à haute pression. Il s'agit d'un module majeur intermédiaire comprenant le compresseur et la turbine à haute pression, et la chambre de combustion. Il est monté, d'après les figures 1 à 3, sur un chariot 2 comprenant un châssis 3, des roulettes 4 montées sur le châssis 3 et une armature 5 s'élevant du châssis 3 et porteuse du module 1. Le chariot 2 est toutefois soulevé du sol et porté par un dispositif d'élévation 6 comprenant un cadre 7, et surtout, disposée dans le cadre 7, une table 8 supérieure sur laquelle le châssis 3 du chariot 2 est posé, et un mécanisme 9 à barres 10 articulées par le milieu, disposé entre la table 8 et le sol, et qui élève celle-là quand l'angle d'articulation des barres 10 est modifié par un vérin 11. Un autre élément de l'ensemble est un outillage 12 prenant l'aspect d'un couvercle fixé à l'arrière d'un couvercle 1 : il s'agit à l'origine d'un « strongback », connu en soi et comprenant principalement une monture 13 en plaque couvrant l'arrière du module 1, auquel elle est boulonnée ou fixée d'une autre manière par des dispositifs non représentés, et qui permet à la fois de le raidir et de protéger le module 1, et des moyens, non représentés ici puisque déjà connus, portés par la monture 13, pour interdire les mouvements de translation et de rotation entre le rotor et le stator du module 1. Mais l'outillage 12 est perfectionné par rapport aux strongbacks connus : il comprend une saillie 14 supérieure à laquelle est fixé un bras de levage 15, dont l'autre extrémité 16 est fixée à l'avant du module 1, et qui porte au centre un anneau d'accrochage 18. Les fixations du bras de levage sont faites par l'insertion d'une goupille amovible 37 à travers la saillie 14 et par un boulonnage à une bride 17 à l'avant du module 1.

D'autres détails du dispositif sont des moyens complémentaires de fixation 19 entre l'outillage 12 et le chariot 2, qui comprennent une saillie 20 se dressant sur le côté de l'outillage 12, un patin 21 au bout de la saillie 20 et de forme carrée, une rainure 22, limitée par des rebords en surplomb 23, établie dans un support 26 au sommet de l'armature 5, une butée 24 au fond de la rainure 22, et une vis 25 entre le patin 21 et le support 26 de la rainure 22. Le support 26 est muni d'un pivot 27 d'axe horizontal, monté dans l'armature 5 et entraîné par un moteur 28, permettant à l'armature 5 de tourner autour de cet axe.

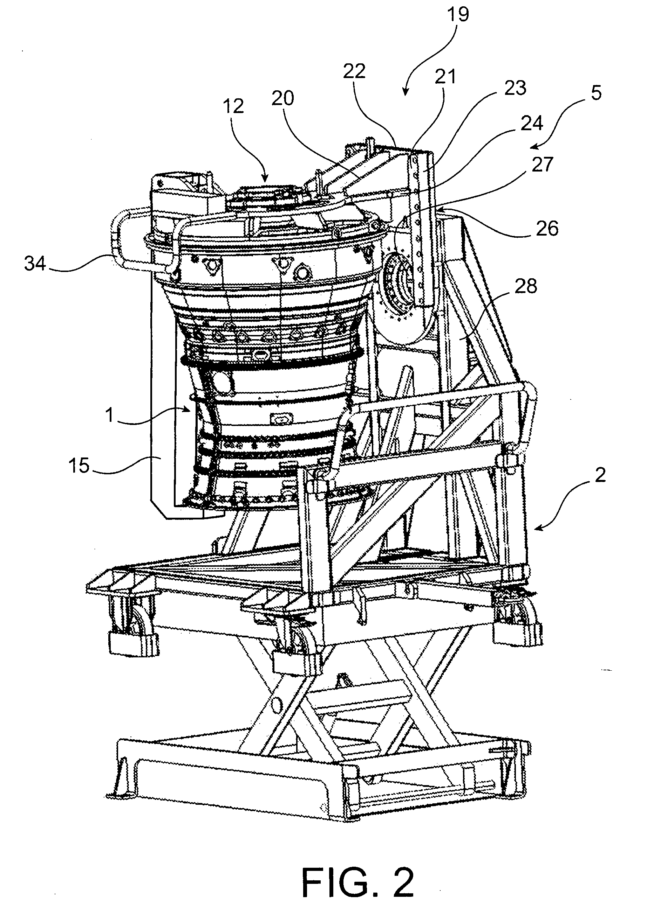

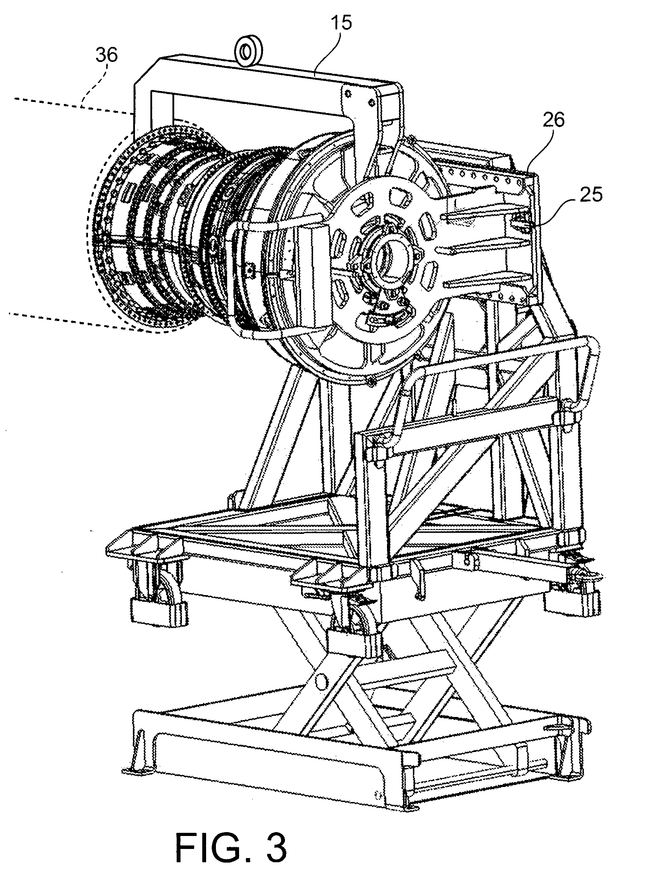

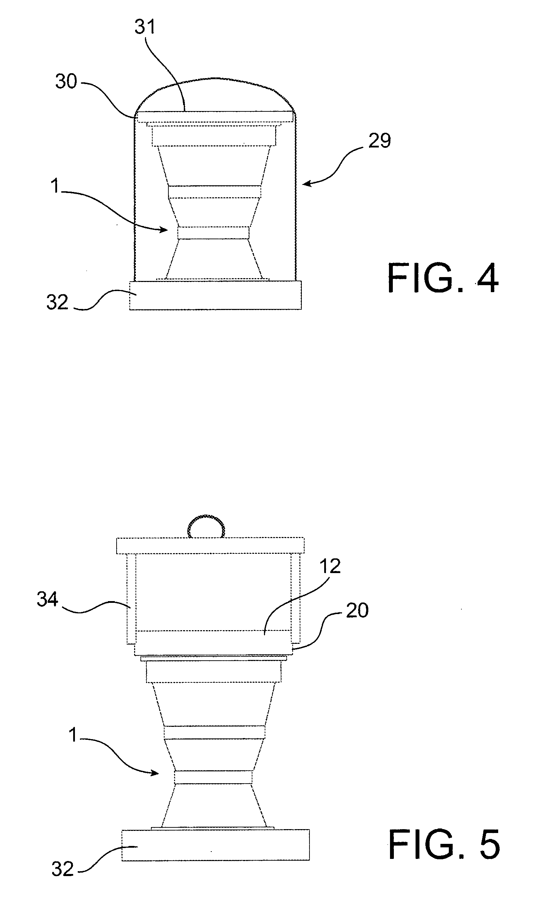

Le traitement de manutention du module 1 en utilisant le dispositif décrit ci-dessous est maintenant décrit. La figure 4 montre le module 1 tel qu'il se présente au début, enfermé dans une caisse 29, avec son axe de rotation vertical et l'arrière du module 1 dirigé en haut. La première étape consiste à ôter un couvercle 30 de la caisse 29 et une armature 31 d'immobilisation du module 1. Quand cela est fait, le module 1, reposant toujours sur le fond 32 de la caisse 30 mais dégagé, reçoit l'outillage 12 qui lui est fixé, puis l'outillage 12 est suspendu à un palan 33, qu'on accroche à la saillie 20 et à une anse 34 (représentée à la figure 2) en saillie du côté opposé de l'outillage 12. L'état de la figure 5 est obtenu. Le palan 33 est soulevé en entraînant l'outillage 12 et le module 1, un outillage à couvercle de protection peut alors être placé aussi à l'avant du module 1 (à l'opposé de l'outillage 12) puis le module 1 est installé sur le chariot 2. L'outillage à l'avant (non représenté) est du genre d'un outillage « strongback » connu, mais il peut être plus léger et installé à la main, grâce à la sûreté de manutention apportée par l'invention, qui soumet le module 1 à moins d'efforts. L'installation sur le chariot 2 s'effectue, dans la position de la figure 1, en introduisant le patin 21 dans la rainure 22, dont l'orientation est alors verticale, en laissant descendre le module 1 jusqu'à ce que le patin atteigne la butée 24, puis en fixant la vis 25. L'étape suivante est une rotation du pivot 27, dont l'axe croise celui du module 1, de manière à obtenir l'état représenté à la figure 3 en faisant basculer le module 1, son axe étant alors à l'horizontale et l'avant du module 1 saillant d'un côté du chariot 2. Le bras de levage 15 est installé au sommet de l'assemblage, la saillie 14 à laquelle il est monté étant alors dirigée vers le haut. Le chariot 2 est ensuite déplacé jusqu'à arriver au-dessus de la table 8 du dispositif d'élévation 6, alors en position basse et logée dans le châssis 7; des butées 35 escamotables par pivotement, disposées à l'avant et à l'arrière du châssis 3, sont alors abaissés. Une commande du vérin 11 produit la montée de la table 8 et le soulèvement du chariot 2 et du module 1. Une chute accidentelle du chariot 2 est empêchée par les butées 35 et par les roulettes 4, qui entourent la table 8 de tous côtés. Le palan 33 peut alors reprendre le module 1 par le bras au bras de levage 15, le soulever du chariot 2 quand les moyens d'assemblage 19 ont été disjoints, puis déplacer le module 1 jusqu'à accoster un autre module 36 du moteur, contre lequel il doit être monté. L'anneau 18 étant placé au-dessus du centre de gravité du module 1, aucun basculement n'est plus à craindre.

Certaines de ces opérations peuvent être accomplies dans un ordre différent: notamment la rotation du module 1, l'enlèvement du palan 33 et l'élévation de la table 8. Il faut noter que si on a représenté un dispositif d'élévation 6 fixe et proche du lieu de montage du module 1, cela n'est pas nécessaire et le dispositif d'élévation 6 aurait pu être intégré au chariot 2.

## Revendications

1. Ensemble de manutention d'un module (1) de moteur d'aéronef, comprenant un chariot (2) mobile et un outillage (12) placé à une extrémité du module (1), l'outillage comprenant une monture (13) et des dispositifs de fixation au module, **caractérisé en ce que** le chariot comprend une armature supérieure (5) établie sur un châssis (3) de support du module et pivotant autour d'un axe (27) horizontal, l'armature supérieure (5) et l'outillage (12) comprenant des dispositifs complémentaires de fixation (19) dans une position de fixation du module au chariot où un axe de rotation du module croise l'axe horizontal.

2. Ensemble de manutention d'un module de moteur d'aéronef selon la revendication 1, **caractérisé en ce que** les dispositifs de fixation complémentaire comprennent une rainure (22) limitée par des bords surplombants (23), un patin (21) coulissant dans la rainure (22) et fixé à une saillie (20) de l'outillage (12) s'étendant hors de la rainure, une butée (24) du patin dans la rainure et un moyen d'immobilisation (25) du patin en butée dans la rainure.

3. Ensemble de manutention d'un module de moteur d'aéronef selon l'une quelconque des revendications 1 ou 2, **caractérisé en ce qu'**il comprend un dispositif d'élévation (6) du châssis (3).

4. Ensemble de manutention d'un module de moteur d'aéronef selon la revendication 3, **caractérisé en ce que** le dispositif d'élévation (6) du châssis comprend une table (8) indépendante du chariot et sur laquelle le chariot peut rouler, des butées d'immobilisation (35) existant entre la table (8) et le chariot (2).

5. Ensemble de manutention d'un module de moteur d'aéronef selon l'une quelconque des revendications 1 à 4, **caractérisé en ce qu'**il comprend un bras de levage (15) pouvant être monté à une extrémité à l'outillage (12), et, à une extrémité opposée (16), à un endroit (17) du module qui est opposé à l'outillage.

## Patentansprüche

1. Anordnung zur Handhabung eines Moduls (1) eines Flugzeugtriebwerks, umfassend einen beweglichen Wagen (2) und ein Gerät (12), das an einem Ende des Moduls (1) angeordnet ist, wobei das Gerät eine Fassung (13) und Vorrichtungen zur Befestigung an dem Modul umfasst, **dadurch gekennzeichnet, dass** der Wagen ein oberes Gestell (5) umfasst, das auf einem Chassis (3) zum Tragen des Moduls errichtet und um eine horizontale Achse (27) schwenkbar ist, wobei das obere Gestell (5) und das Gerät (12) ergänzende Vorrichtungen zur Befestigung (19) in einer Befestigungsposition des Moduls an dem Wagen, in der eine Rotationsachse des Moduls die horizontale Achse kreuzt, umfassen.

2. Anordnung zur Handhabung eines Moduls eines Flugzeugtriebwerks nach Anspruch 1, **dadurch gekennzeichnet, dass** die ergänzenden Befestigungsvorrichtungen eine Nut (22), die durch hinausragende Ränder (23) begrenzt ist, einen Gleitschuh (21), der in der Nut (22) gleitet und an einem Vorsprung (20) des Gerätes (12), der außerhalb der Nut verläuft, befestigt ist, einen Anschlag (24) des Gleitschuhs in der Nut sowie ein Mittel zum Festlegen (25) des Gleitschuhs in Anschlag in der Nut umfassen.

3. Anordnung zur Handhabung eines Moduls eines Flugzeugtriebwerks nach einem der Ansprüche 1 oder 2, **dadurch gekennzeichnet, dass** sie eine Vorrichtung zum Anheben (6) des Chassis (3) umfasst.

4. Anordnung zur Handhabung eines Moduls eines Flugzeugtriebwerks nach Anspruch 3, **dadurch gekennzeichnet, dass** die Vorrichtung zum Anheben (6) des Chassis einen Tisch (8) umfasst, der von dem Wagen unabhängig ist und auf dem der Wagen fahren kann, wobei zwischen dem Tisch (8) und dem Wagen (2) Festlegungsanschläge (35) vorhanden sind.

5. Anordnung zur Handhabung eines Moduls eines Flugzeugtriebwerks nach einem der Ansprüche 1 bis 4, **dadurch gekennzeichnet, dass** sie einen Hebearm (15) umfasst, der an einem Ende an dem Gerät (12) und an einem gegenüberliegenden Ende (16) an einer Stelle (17) des Moduls, die von dem Gerät abgewandt ist, angebracht werden kann.

## Claims

1. An aircraft engine module handling assembly (1), including a moving carriage (2) and tooling (12) positioned at an end of the module (1), where the tooling includes a mount (13) and devices for attachment to the module, **characterised in that** the carriage includes an upper reinforcement structure (5) set up on a module support frame (3), and pivoting around a horizontal axis (27), where the upper reinforcement structure (5) and the tooling (12) include additional devices (19) for securing the module to the carriage in a position in which an axis of rotation of the module intersects the horizontal axis.

2. An aircraft engine module handling assembly according to claim 1, **characterised in that** the additional attachment devices include a groove (22) limited by overhanging edges (23), where a skid (21) sliding in the groove (22) and attached to a projection (20) of the tooling (12) extends out of the groove, with a stop (24) of the skid in the groove and a means (25) of immobilising the skid at the stop in the groove.

3. An aircraft engine module handling assembly according to either of the claims 1 or 2, **characterised in that** it includes a device (6) for raising the frame (3).

4. An aircraft engine module handling assembly according to claim 3, **characterised in that** the device (6) for raising the frame includes a table (8) independent of the carriage, and on which the carriage can roll, and where there are immobilising stops (35) between the table (8) and the carriage (2).

5. An aircraft engine module handling assembly according to any of the claims 1 to 4, **characterised in that** it includes a lifting arm (15) able to be assembled at one end with the tooling (12) and, at an opposite end (16), at a location (17) of the module which is opposite the tooling.
